# EUROPÄISCHE PATENTSCHRIFT

(11) **EP 0 445 197 B1**
(45) Veröffentlichungstag und Bekanntmachung des Hinweises auf die Patenterteilung: **06.10.1993**
(21) Anmeldenummer: 90900126.5
(22) Anmeldetag: 21.11.1989
(51) Int. Cl.: A01G 9/10

(54) **TROG FÜR PFLANZENTÖPFE**
TROUGH FOR PLANT-POTS
BAC POUR POTS DE FLEURS

(30) Priorität: 24.11.1988 DE 3839664
(43) Veröffentlichungstag der Anmeldung: 11.09.1991
(73) Patentinhaber: FISCHER, Ralf Rüdiger, D-63110 Rodgau (DE); FISCHER, Bernd, D-63110 Rodgau (DE)
(72) Erfinder: FISCHER, Ralf Rüdiger, D-63110 Rodgau (DE); FISCHER, Bernd, D-63110 Rodgau (DE)
(74) Vertreter: Katscher, Helmut, Dipl.-Ing.
(86) Internationale Anmeldenummer: EP8901411
(87) Internationale Veröffentlichungsnummer: WO9005447

(56) Entgegenhaltungen:
- DE-A- 2 732 982
- FR-A- 1 346 075
- FR-A- 2 124 192
- FR-A- 2 442 005
- US-A- 4 476 651

## Beschreibung

Die Erfindung betrifft einen Trog für Pflanzentöpfe mit einem Trogboden, von dessen beiden Längsrändern sich Trogseitenwände nach oben erstrecken, zwischen denen eine Reihe von Pflanzentöpfen aufgenommen werden kann, die auf dem Trogboden stehen können.

Derartige Tröge, die auch als Kulturrinnen bezeichnet werden, dienen dazu, eine Reihe von Pflanzentöpfen aufzunehmen, in denen Pflanzen in Gewächshäusern oder im Freien kultiviert werden. Die Tröge dienen zugleich als Bewässerungsrinnen. Am oberen Ende der leicht abfallend angeordneten Tröge wird Wasser, ggf. mit darin gelöstem Düngemittel, zugegeben, das zum unteren Ende des Troges fließt. Da die Pflanzentöpfe auf dem Trogboden stehen, nehmen die Pflanzen das Wasser und das Düngemittel auf. Vom unteren Trogende wird das Wasser im Kreislauf wieder zum oberen Trogende gepumpt. Dadurch werden Verluste und eine Belastung des Bodens vermieden.

Überwiegend werden derartige Tröge bisher in Gewächshäusern eingesetzt. Die Pflanzentöpfe haben eine ausreichende Standsicherheit, so daß es ausreicht, die Pflanzentöpfe auf den Trogboden zu stellen. Ein für die Verwendung in Gewächshäusern bestimmter Trog der eingangs genannten Gattung ist aus der DE-A-27 32 982 bekannt. Bei diesem Trog haben die Trogseitenwände eine glatte durchgehende Oberkante.

Beim Einsatz in Freilandkulturen sind die Pflanzentöpfe insbesondere bei stürmischem Wetter erheblichen Windkräften ausgesetzt. Sie können - zumindest in Troglängsrichtung - umfallen oder wenigstens soweit gekippt werden, daß der Topfboden den Trogboden nicht mehr flächig berührt, wodurch die Wasseraufnahme unterbrochen ist. Ein Ausrichten aller Pflanzentöpfe einer größeren Anlage nach stürmischem Wetter wäre mit unzumutbar großem Arbeitsaufwand verbunden.

Aufgabe der Erfindung ist es daher, einen Trog der eingangs genannten Gattung zu schaffen, der auch bei der Verwendung in Freilandkulturen eine so sichere Aufnahme der Pflanzentöpfe ermöglicht, daß diese auch bei Sturm nicht kippen oder umfallen können, auch wenn zwischen benachbarten Pflanzentöpfen in Längsrichtung des Troges Abstände eingehalten werden, so daß sich die Pflanzentöpfe nicht gegenseitig stützen können. Außerdem soll der Trog einfach und mit geringen Kosten herzustellen sein.

Diese Aufgabe wird erfindungsgemäß dadurch gelöst, daß von den beiden Trogseitenwänden Halteelemente gegeneinander vorspringen, um die Pflanzentöpfe in Troglängsrichtung im Abstand zueinander halten.

Die von den Trogseitenwänden vorspringenden Halteelemente halten die einzelnen Pflanzentöpfe, so daß diese insbesondere auch in Troglängsrichtung nicht umfallen können, und zwar vor allem auch dann, wenn in Troglängsrichtung zwischen benachbarten Pflanzentöpfen ein Abstand eingehalten werden muß.

Vorzugsweise sind die Halteelemente Halteflansche, die von den Oberkanten der beiden Trogseitenwände gegeneinander vorspringen und in denen in Troglängsrichtung im Abstand zueinander angeordnete Halteausnehmungen für die Pflanzentöpfe ausgebildet sind.

Gemäß einer besonders bevorzugten Ausführungsform des Erfindungsgedankens ist vorgesehen, daß die Halteflansche durch in die Horizontale umgekantete Randstreifen an den Oberkanten der Trogseitenwände gebildet sind. Bei dieser Ausführungsform besteht der gesamte Trog einschließlich der Halteflansche aus einem einstückigen Blechteil, das in fertigungstechnisch sehr einfacher Weise durch Profilierung der beiden Längsränder und viermaliges Abkanten hergestellt ist und ein C-Profil bildet.

In Weiterbildung des Erfindungsgedankens wird eine zusätzliche Halterung der Pflanzentöpfe dadurch erreicht, daß aus den Trogseitenwänden beiderseits jeder Halteausnehmung des Halteflansches Haltelaschen ausgestanzt und in das Troginnere umgekantet sind und daß die dabei gebildete Stanzöffnung im Abstand über dem Trogboden liegt. Diese ausgestanzten Haltelaschen verhindern, daß der Pflanzentopf gekippt werden kann, während er in den benachbarten Halteausnehmungen aufgenommen ist. Dadurch wird ein auch nur geringfügiges Kippen verhindert, so daß der Topfboden in flächiger Berührung mit dem Trogboden bleibt, so daß die Wasseraufnahme nicht beeinträchtigt wird.

Weitere vortelhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
Fig. 1 in räumlicher Darstellungsweise einen Trog für Pflanzentöpfe,
Fig. 2 eine Stirnansicht einer anderen Ausführungsform eines Troges,
Fig. 3 eine Draufsicht auf den Trog nach Fig. 2,
Fig. 4 einen vergrößerten Teilschnitt im Bereich eines Halteflansches, der auf eine Trogseitenwand aufgesteckt ist,
Fig. 5 eine Draufsicht auf einen Trog gemäß einer weiteren Ausführungsform, bei der die Halteflansche flexible Noppen aufweisen,
Fig. 6 einen Teilschnitt längs der Linie VI-VI in Fig. 5,
Fig. 7 eine Teil-Draufsicht auf zwei an einem Trapezblech ausgebildete Tröge,
Fig. 8 einen Schnitt längs der Linie VIII-VIII in Fig. 7,
Fig. 9 einen Trog im senkrechten Schnitt mit zwei unterschiedlichen Ausführungsformen von aufgesteckten Haltern,
Fig. 10 in räumlicher Darstellungsweise einen auf eine Rinne aufsteckbaren Halter und
Fig. 11 in räumlicher Darstellungsweise einen Abschnitt eines Trogs mit tiefgezogenen Formvorsprüngen in der Trogseitenwand

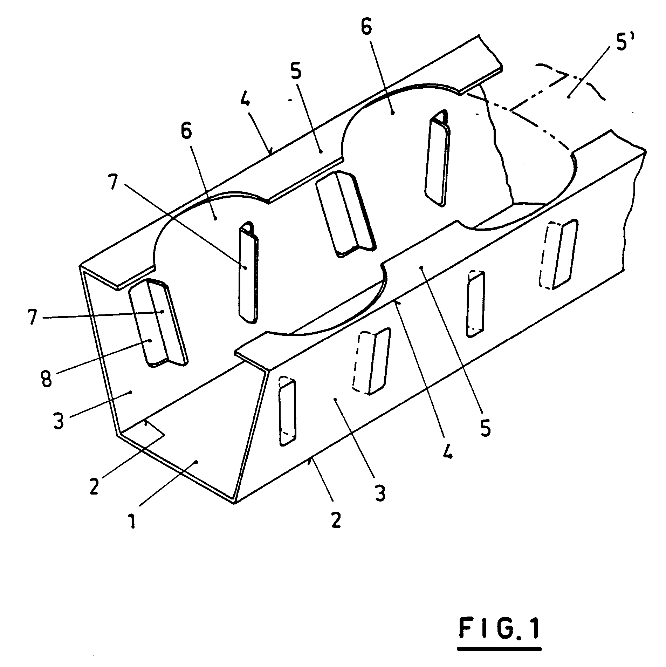

Der in Fig. 1 gezeigte Trog zur Aufnahme einer Reihe von Pflanzentöpfen ist aus Blech gekantet und weist einen Trogboden 1 auf, von dessen beiden Längsrändern 2 sich jeweils eine Trogseitenwand 3 nach oben erstreckt. Bei der in Fig. 1 gezeigten Ausführungsform hat der Trog Trapezform, d.h. die Trogseitenwände 3 divergieren nach oben.

Von den Oberkanten 4 der Trogseitenwände 3 ist jeweils ein Halteflansch 5 horizontal nach innen gerichtet. Beim Ausführungsbeispiel nach Fig. 1 bestehen die Halteflansche 5 aus den abgekanteten Randstreifen an den Oberkanten 4 der Trogseitenwände 3. Die Halteflansche 5 weisen Halteausnehmungen 6 auf, die in Troglängsrichtung im Abstand zueinander angeordnet und an die Form der aufzunehmenden Pflanzentöpfe angepaßt sind. Beim dargestellten Ausführungsbeispiel ist der Trog zur Aufnahme von kegelstumpfförmigen Pflanzentöpfen bestimmt; deshalb sind die Halteausnehmungen 6 jeweils durch einen Kreisbogen begrenzt. Stattdessen können die Halteausnehmungen 6 zur Anpassung an andere Topfquerschnitte auch andere Formen haben und beispielsweise rechteckig sein zur Aufnahme von rechteckigen, insbesondere quadratischen Pflanzentöpfen.

In Fig. 1 ist mit strichpunktierten Linien angedeutet, daß die Halteflansche auch so breit ausgeführt werden können, daß sich gegenüberliegende Halteflansche 5' berühren oder sogar überlappen, so daß der Trog an seiner Oberseite im Bereich zwischen den Pflanzentöpfen geschlossen ist.

Anstelle der hier beschriebenen Ausführung aus Blech kann der Trog auch aus anderen Materialien bestehen, beispielsweise Kunststoff.

In Troglängsrichtung gesehen sind beiderseits jeder Halteausnehmung 6 aus der zugeordneten Trogseitenwand 3 zwei Haltelaschen 7 ausgestanzt und in das Troginnere umgekantet. Diese Haltelaschen dienen dazu, den unterhalb der Halteflansche 5 liegenden Abschnitt des aufgenommenen Pflanzentopfes zusätzlich zu halten, um ein auch nur geringfügiges Kippen in Troglängsrichtung zu vermeiden. Die durch das Ausstanzen der Haltelaschen 7 gebildeten Stanzöffnungen 8 liegen im Abstand über dem Trogboden 1, damit das entlang dem Trogboden 1 strömende Wasser durch die Stanzöffnungen nicht austreten kann.

Diese auch als Kulturrinnen bezeichneten Tröge werden üblicherweise auf (nicht dargestellten) Rahmen zusammengefaßt, Auf diesen Rahmen stehen dann mehrere Tröge in mehr oder minder dichtem Abstand oder unmittelbar nebeneinander.

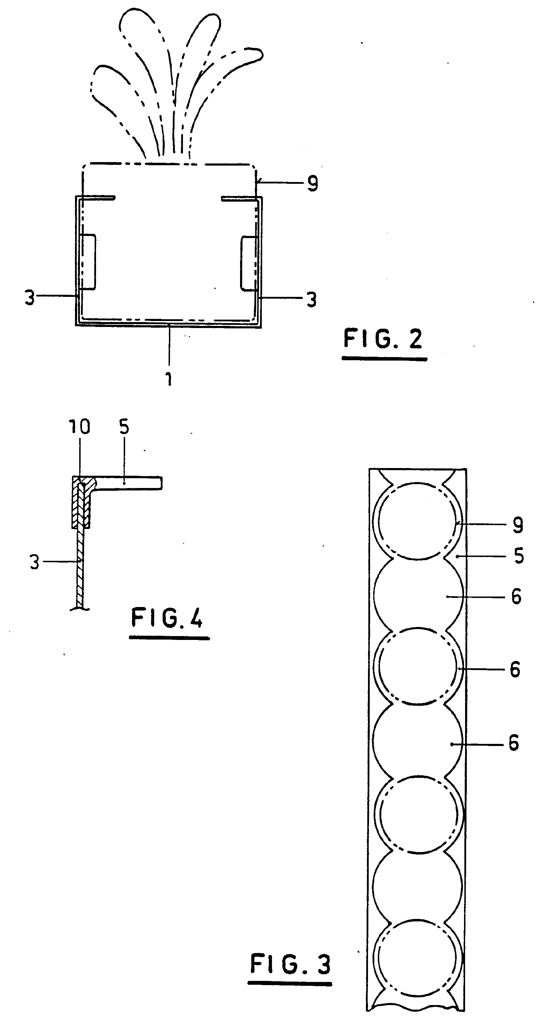

Das in den Fig. 2 und 3 dargestellte Ausführungsbeispiel eines Troges für die dort mit strichpunktierten Linien angedeuteten Pflanzentöpfe 9 unterscheidet sich von dem vorher beschriebenen Ausführungsbeispiel in erster Linie dadurch, daß die Trogseitenwände 3 senkrecht angeordnet sind. Dieser Trog ist in erster Linie zur Aufnahme von Pflanzentöpfen 9 mit senkrechten Wänden bestimmt.

Aus der Draufsicht gemäß Fig. 3 erkennt man, daß bei diesem Ausführungsbeispiel die Halteausnehmungen 6 in Troglängsrichtung in einem Abstand zueinander angeordnet sind, der kleiner ist als der geringstmögliche Abstand benachbarter Pflanzentöpfe 9. Der Abstand der Halteausnehmungen 6 ist hierbei so gewählt, daß er einem ganzzahligen Bruchteil des größten vorgesehenen Abstandes der Pflanzentöpfe entspricht. Diese Anordnung gibt die Möglichkeit, den gegenseitigen Abstand benachbarter Pflanzentöpfe 9 je nach der Größe der darin kultivierten Pflanzenart unterschiedlich zu wählen, ohne daß hierfür unterschiedliche Tröge bereitgestellt werden müßten. Beim Beispiel nach Fig. 3 ist angedeutet, daß in jeder zweiten Halteausnehmung 6 ein Pflanzentopf 9 angeordnet ist. Wenn ein größerer Abstand benachbarter Pflanzentöpfe 9 erwünscht ist, kann beispielsweise in jeder dritten Halteausnehmung 6 ein Pflanzentopf 9 aufgenommen werden. Anstelle der dargestellten Form der Halteausnehmungen 6 bzw. der dazwischen verbleibenden Abschnitte der Halteflansche 5 können diese auch so gestaltet werden, daß Zackenartige oder zahnartige Vorsprünge verbleiben, die die Pflanzentöpfe halten und zwischen die benachbarten Pflanzentöpfe greifen.

Fig. 4 zeigt den oberen Rand einer Trogseitenwand 3, auf den eine aus Kunststoff bestehende Profilschiene 10 aufgesteckt ist, die den horizontalen Halteflansch 5 bildet. Die Kunststoffschiene 10 kann auch in anderer Weise an der Trogseitenwand 3 befestigt sein, beispielsweise geklemmt, angeklebt oder angespritzt.

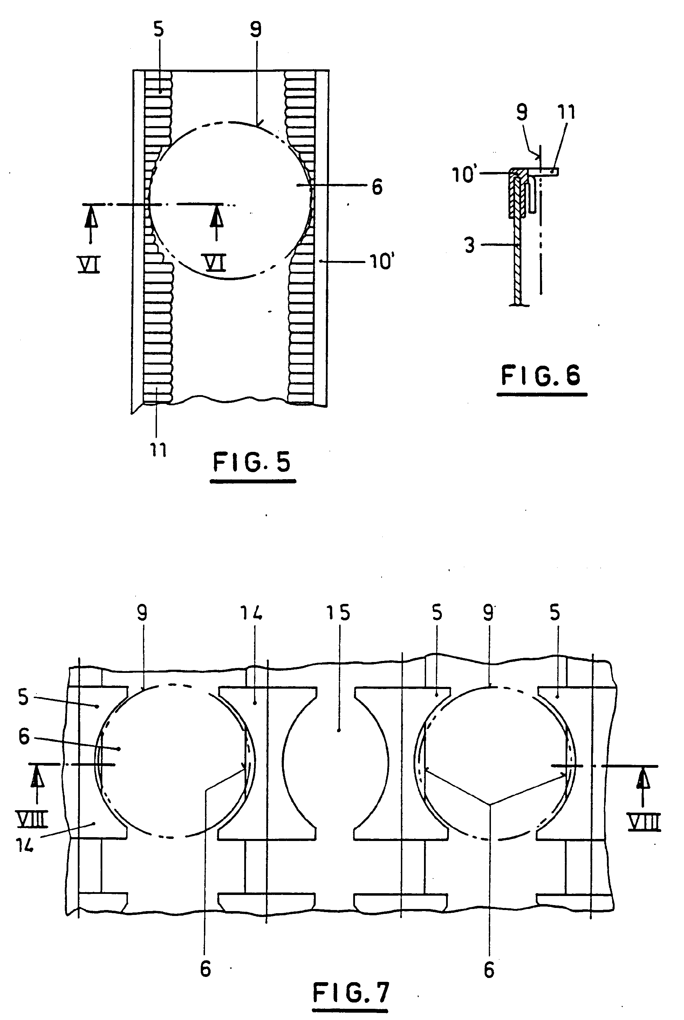

Bei der in den Fig. 5 und 6 dargestellten Ausführungsform einer auf die Trogseitenwand 3 aufgesteckten, aus Kunststoff bestehenden Profilschiene 10' wird der Halteflansch 5 durch eine Reihe von horizontalen flexiblen Fingern oder Noppen 11 gebildet. Beim Einsetzen eines Pflanzentopfes 9 werden diese Noppen 11 teilweise nach unten gebogen, wie in den Fig. 5 und 6 dargestellt ist, so daß dort die Halteausnehmung 6 für den Pflanzentopf 9 entsteht.

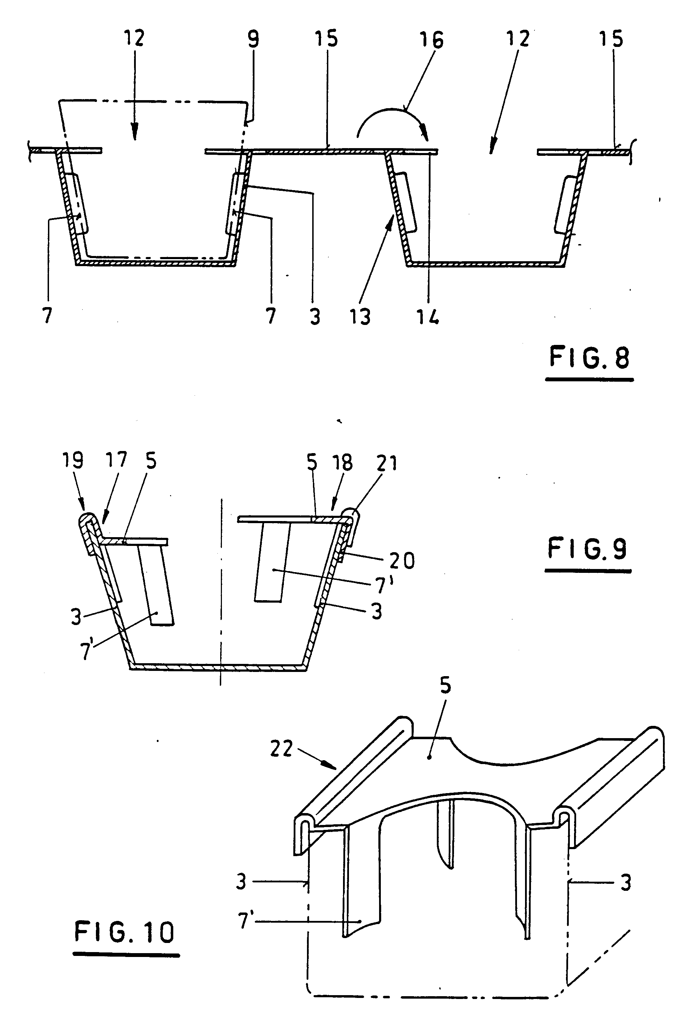

Bei dem Ausführungsbeispiel nach den Fig. 7 und 8 ist jeder Trog durch jeweils eine Rinne 12 eines an sich bekannten Trapezblechs 13 gebildet. Das Trapezblech 13 weist somit mehrere prallel nebeneinanderliegende Tröge zur Aufnahme von Pflanzentöpfen 9 auf.

Die Halteflansche 5, die die Pflanzentöpfe 9 halten, bestehen hierbei aus im Abstand zueinander angeordneten profilierten Blechlappen 14, die aus den zwischen den Rinnen 12 an der Oberseite des Trapezblechs 13 liegenden horizontalen Flanschflächen 15 ausgestanzt und um 180° über die jeweils benachbarte Rinne 12 gebogen sind. Diese Biegerichtung ist in Fig. 8 mit dem Pfeil 16 angedeutet. Auch hierbei können aus den Trogseitenwänden 3 Haltelaschen 7 ausgestanzt sein, wie dies bereits im Zusammenhang mit Fig. 1 beschrieben wurde.

Fig. 9 zeigt zwei Ausführungsformen von auf die Trogseitenwände 3 aufsteckbaren Haltern 17 und 18, die beispielsweise aus Kunststoff gespritzt sind. Der Halter 17 bzw. 18 weist einen im Querschnitt umgekehrt U-förmigen Abschnitt 19 auf, der über die Oberkante der Trogseitenwand 3 greift. Von diesem Abschnitt 19 erstreckt sich ein den Halteflansch 5 bildender Teil horizontal nach innen und ist so geformt, daß er den eingesetzten Pflanzentopf hält.

Bei dem Ausführungsbeispiel des Halters 18 erstreckt sich dieser horizontale Halteflansch bis über die Oberkante der zugeordneten Trogseitenwand 3 und ist mit einem nach unten abgewinkelten Randstreifen 20 verbunden. Eine aufgesteckte Klammer 21, beispielsweise aus einem gebogenen Blechstreifen, klemmt den Halter 18 an der Trogseitenwand 3 fest.

Die Halter 17 bzw. 18 können an beliebiger Stelle an der Trogseitenwand 3 aufgesteckt werden, so daß die- jeweils gewünschten gegenseitigen Abstände der Pflanzentöpfe bestimmt werden können. Hierbei ist es nicht möglich, wie bei den früheren Ausführungsbeispielen gezeigt, Haltelaschen 7 aus den Trogseitenwänden 3 auszustanzen. Stattdessen sind Haltelaschen 7' an den vorzugsweise aus kunststoffgespritzten Haltern 17 bzw. 18 angeformt. Diese Haltelaschen 7' erstrecken sich von den Halteflanschen 5 nach unten und stützen den aufgenommenen Pflanzentopf, um ein Kippen in Längsrichtung des Troges zu verhindern.

Bei der in Fig. 10 gezeigten Ausführungsform eines Halters 22 sind die die beiden gegenüberliegenden Trogwände 3 (dort nur mit strichpunktierten Linien angedeutet) übergreifenden Teile zu einem gemeinsamen Halter 22 verbunden, der den Trog überbrückt. Diese Brücke oder Steg bildet die horizontalen Flansche 5, die dann jeweils zwischen benachbarten Pflanzentöpfen liegen. Auch bei dieser Ausführung erstrecken sich Haltelaschen 7' von den horizontalen Halteflanschen 5 nach unten, um die Pflanzentöpfe zu stützen.

Die Ausführungsformen nach den Fig. 9 und 10, und zwar insbesondere die Trogform mit Trapezquerschnitt nach Fig. 9, haben den Vorteil, daß die Tröge zur Erleichterung des Transports gestapelt werden können, weil die Halteflansche 5 dabei nicht stören. Außerdem ist durch die Verwendung von einzelnen Haltern 17, 18 bzw. 22 eine einfachere Anpassung an unterschiedliche Formen und Größen von Pflanzentöpfen und eine jeweils angepaßte Wahl des gegenseitigen Abstandes der Pflanzentöpfe in einfacher Weise möglich.

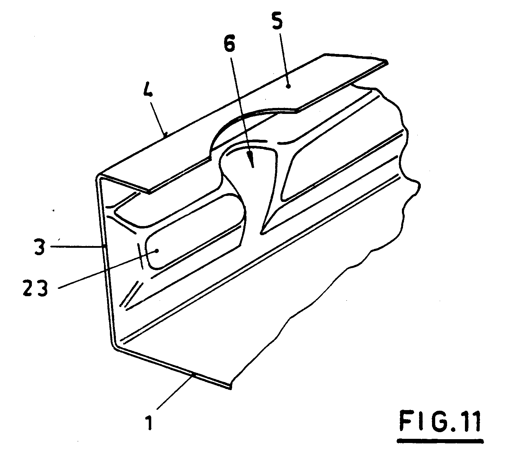

Fig. 11 zeigt in einer räumlichen Darstellung einen Abschnitt eines Trogs gemäß einer weiteren abgewandelten Ausführungsform. Zur Bildung von Halteelementen zum Halten der Pflanzentöpfe sind die beiden Trogseitenwände 3 (von denen nur eine dargestellt ist) mit nach innen ragenden Formvorsprüngen 23 versehen. Die Formvorsprünge 23 sind durch Tiefziehen aus der Trogseitenwand 3 geformt, die dadurch noch eine besondere Versteifung erhält. Jeder Pflanzentopf wird durch die vier benachbarten Formvorsprünge 23 gehalten, nämlich jeweils zwei von jeder Trogseitenwand 3 vorspringende Formvorsprünge 23.

Bei der in Fig. 11 gezeigten Ausführungsform sind zusätzlich zu den Formvorsprüngen 23 noch die bereits beschriebenen Halteflansche 5 von den Oberkanten 4 der Trogseitenwände 3 gegeneinander umgekantet. Die Halteausnehmung 6 für einen Pflanzentopf wird hierbei sowohl von den Haltelaschen 5 als auch von den Formvorsprüngen 23 gebildet. Bei dieser Ausführung mit Formvorsprüngen 23 kann auch auf die Halteflansche 5 verzichtet werden, wenn die Formvorsprünge 23 ausreichend hoch ausgeführt sind, um den Pflanzentopf zu halten. Dies gilt auch für die vorher beschriebenen Ausführungen, bei denen die Haltelaschen 7 bzw. 7' so hoch ausgeführt werden können, daß sie eine ausreichende seitliche Stütze für die Pflanzentöpfe bilden, so daß auf die Haltelaschen 5 auch dort verzichtet werden kann.

## Patentansprüche

1. Trog für Pflanzentöpfe mit einem Trogboden (1), von dessen beiden Längsrändern (2) sich Trogseitenwände (3) nach oben erstrecken, zwischen denen eine Reihe von Pflanzentöpfen aufgenommen werden kann, die auf dem Trogboden (1) stehen können, dadurch gekennzeichnet, daß von den beiden Trogseitenwänden (3) Halteelemente (5, 7, 7', 23) gegeneinander vorspringen, um die Pflanzentöpfe in Troglängsrichtung im Abstand zueinander halten.

2. Trog nach Anspruch 1, dadurch gekennzeichnet, daß die Halteelemente Halteflansche (5) sind, die von den Oberkanten (4) der beiden Trogseitenwände (3) gegeneinander vorspringen und in denen in Troglängsrichtung im Abstand zueinander angeordnete Halteausnehmungen (6) für die Pflanzentöpfe ausgebildet sind.

3. Trog nach Anspruch 2, dadurch gekennzeichnet, daß die Halteflansche (5) durch in die Horizontale umgekantete Randstreifen an den Oberkanten (4) der Trogseitenwände (3) gebildet sind.

4. Trog nach Anspruch 1, dadurch gekennzeichnet, daß als Halteelemente aus den Trogseitenwänden (3) Haltelaschen (7) ausgestanzt und in das Troginnere umgekantet sind und daß die dabei gebildete Stanzöffnung (8) im Abstand über dem Trogboden (1) liegt.

5. Trog nach Anspruch 1, dadurch gekennzeichnet, daß die Trogseitenwände (3) zur Bildung von Halteelementen mit nach innen ragenden Formvorsprüngen (23) versehen sind.

6. Trog nach Anspruch 5, dadurch gekennzeichnet, daß die Formvorsprünge (23) tiefgezogen sind.

7. Trog nach Anspruch 2, dadurch gekennzeichnet, daß die Halteflansche (5) an Profilleisten (10) ausgebildet sind, die an den Oberkanten der Trogseitenwände (3) befestigt sind.

8. Trog nach Anspruch 7, dadurch gekennzeichnet, daß die die Halteflansche (5) bildenden Profilleisten (10) auf die Oberkanten der Trogseitenwände (3) aufgesteckt sind.

9. Trog nach Anspruch 7 oder 8, dadurch gekennzeichnet, daß die Profilleisten (10) aus Kunststoff bestehen.

10. Trog nach Anspruch 2, dadurch gekennzeichnet, daß der Abstand benachbarter Halteausnehmungen (6) einen ganzzahligen Bruchteil des größten vorgesehenen Abstands der Pflanzentöpfe (9) beträgt.

11. Trog nach Anspruch 2, dadurch gekennzeichnet, daß er durch jeweils eine Rinne (12) eines Trapezblechs (13) gebildet wird und daß die Halteflansche (5) aus im Abstand zueinander angeordneten profilierten Blechlappen (14) bestehen, die aus den beiderseits an die Rinne (12) anschließenden obenliegenden horizontalen Flanschflächen (15) des Trapezblechs (13) ausgestanzt und um 180° über die Rinne (12) gebogen sind.

12. Trog nach Anspruch 7, dadurch gekennzeichnet, daß die Halteflansche (5) jeweils aus einer Reihe von horizontalen flexiblen Noppen (11) bestehen, die durch die eingesetzten Pflanzentöpfe (9) umbiegbar sind.

13. Trog nach Anspruch 12 dadurch gekennzeichnet, daß sich die gegeneinander erstreckenden Halteflansche (5') der gegenüberliegenden Trogseitenwände (3) berühren oder überlappen.

14. Trog nach Anspruch 2, dadurch gekennzeichnet, daß die Halteflansche (5) durch sich horizontal erstreckende Teile von auf die Trogseitenwände (3) aufgesteckten Haltern (17, 18, 22) gebildet werden.

15. Trog nach Anspruch 14, dadurch gekennzeichnet, daß nach unten ragende Haltelaschen (7') an den Haltern (17, 18, 22) angeformt sind.

16. Trog nach Anspruch 14, dadurch gekennzeichnet, daß die Halteflansche (5) an einem die benachbarten Trogseitenwände (3) überbrückenden Halter (22) als Steg ausgebildet sind.

## Claims

1. Trough for plant pots with a trough base (1), from the two lengthwise edges (2) of which trough side walls (3) extend upwards, between which a row of plant pots can be held which can stand on the trough base (1), characterised in that retaining elements (5, 7, 7', 23) project from the two side walls (3) of the trough opposite each other in order to keep the plant pots at a distance from each other in the lengthwise direction of the trough.

2. Trough according to Claim 1, characterised in that the retaining elements are retaining flanges (5) which project opposite each other from the top edges (4) of the two trough side walls (3) and in which retaining recesses (6) are constructed in the lengthwise direction of the trough at a distance from each other for the plant pots.

3. Trough according to Claim 2, characterised in that the retaining flanges (5) are formed by edge strips tilted into the horizontal on the top edges (4) of the side walls (3) of the trough.

4. Trough according to Claim 1, characterised in that, as retaining elements, retaining brackets (7) are stamped out of the side walls (3) of the trough and folded back into the interior of the trough and that the stamped opening (8) formed by this is located at a distance above the base (1) of the trough.

5. Trough according to Claim 1, characterised in that the side walls (3) of the trough are fitted with formed projections (23) projecting inwards to form retaining elements.

6. Trough according to Claim 5, characterised in that the formed projections (23) are moulded.

7. Trough according to Claim 2, characterised in that the retaining flanges(5) are constructed on sectional strips (10) which are fixed to the top edges of the side walls (3) of the trough.

8. Trough according to Claim 7, characterised in that the sectional strips (10) forming the retaining flanges (5) are placed on the top edges of the side walls (3) of the trough.

9. Trough according to Claims 7 or 8, characterised in that the sectional strips (10) consist of plastics.

10. Trough according to Claim 2, characterised in that the interval between adjacent retaining recesses (6) makes up a whole-number fraction of the greatest foreseen interval between the plant pots (9).

11. Trough according to Claim 2, characterised in that it is formed in each case by a channel (12) of a sheet with trapezoidal corrugations (13) and that the retaining flanges (5) consist of sectional sheet tabs (14) arranged at a distance from each other, which are punched out of the top horizontal flange surfaces (15) of the sheet (13) with trapezoidal corrugations connecting with the channel (12) on both sides and bent at 180° over the channel (12).

12. Trough according to Claim 7, characterised in that the retaining flanges (5) consist in each case of a series of horizontal flexible nubs (11) which can be bent back by the inserted plant pots (9).

13. Trough according to Claim 12, characterised in that the retaining flanges (5') of the side walls (3) of the trough extending opposite each other touch or overlap.

14. Trough according to Claim 2, characterised in that the retaining flanges (5) are formed by horizontally extending parts of holders (17, 18, 22) placed on the side walls (3) of the trough.

15. Trough according to Claim 14, characterised in that retaining brackets (7') projecting downwards are moulded on to the holders (17, 18, 22).

16. Trough according to Claim 14, characterised in that the retaining flanges (5) are constructed as a web on a holder (22) bridging over the adjacent side walls (3) of the trough.

## Revendications

1. Bac pour pots de fleurs comportant un fond (1) à partir des deux bords latéraux (2) duquel s'étendent vers le haut des parois latérales (3) entre lesquelles peuvent être reçus une série de pots de fleurs, qui peuvent s'appuyer sur le fond (1) du bac, caractérisé en ce que des éléments d'appui (5, 7, 7', 23) font saillie en regard l'un de l'autre des deux parois latérales (3) du bac pour maintenir les pots de fleurs à distance l'un de l'autre dans la direction longitudinale du bac.

2. Bac selon la revendication 1, caractérisé en ce que les éléments d'appui sont des ailes d'appui (5), qui font saillie des bords supérieurs (4) des deux parois latérales (3) du bac en regard et dans lesquelles des évidements d'appui (6) agencés à distance l'un de l'autre dans la direction longitudinale du bac sont formés pour recevoir les pots de fleurs.

3. Bac selon la revendication 2, caractérisé en ce que les ailes d'appui (5) sont formées par des bandes marginales repliées à l'horizontale sur les bords supérieurs (4) des parois latérales (3) du bac.

4. Bac selon la revendication 1, caractérisé en ce que l'on estampe a titre d'éléments d'appui dans les parois latérales (3) du bac des pattes d'appui (7) et on les replie à l'intérieur du bac, et l'ouverture estampée (8) ainsi formée est à une certaine distance du fond (1) du bac.

5. Bac selon la revendication 1, caractérisé en ce que les parois latérales (3) du bac sont dotées de saillies moulées (23) dépassant vers l'intérieur pour former des éléments d'appui.

6. Bac selon la revendication 5, caractérisé en ce que les saillies moulées (23) sont embouties.

7. Bac selon la revendication 2, caractérisé en ce que les ailes d'appui (5) se présentent sous la forme de profilés (10) qui sont fixés aux bords supérieurs des parois latérales (3) du bac.

8. Bac selon la revendication 7, caractérisé en ce que les profilés (10) formant les ailes d'appui (5) sont enfichés sur les bords supérieurs des parois latérales (3) du bac.

9. Bac selon la revendication 7 ou 8, caractérisé en ce que les profilés (10) sont constitués de matière plastique.

10. Bac selon la revendication 2, caractérisé en ce que l'écart entre évidements d'appui voisins (6) est une fraction entière de l'écart le plus grand prévu entre les pots de fleurs (9).

11. Bac selon la revendication 2, caractérisé en ce qu'il est formé respectivement d'une gouttière (12) de tôle à section trapézoïdale (13) et les ailes d'appui (5) sont constituées de pattes de tôle (14) profilées et agencées à distance l'une de l'autre, qui sont estampées dans les faces (15) des ailes horizontales supérieures de la tôle à section trapézoïdale (13) qui se raccordent des deux côtés à la gouttière (12) et sont repliées de 180° au-dessus de la gouttière (12).

12. Bac selon la revendication 7, caractérisé en ce que les ailes d'appui (5) sont constituées respectivement d'une série de nopes flexibles horizontales (11) qui peuvent être repliées par les pots de fleurs utilisés (9).

13. Bac selon la revendication 12, caractérisé en ce que les ailes d'appui (5') s'étendant l'une en regard de l'autre des parois latérales (3) du bac viennent en contact ou se chevauchent.

14. Bac selon la revendication 2, caractérisé en ce que les ailes d'appui (5) sont formées par des parties s'étendant horizontalement de supports (17, 18, 22) enfichés sur les parois latérales (3) du bac.

15. Bac selon la revendication 14, caractérisé en ce que des pattes d'appui (7') faisant saillie vers le bas sont moulées sur les supports (17, 18, 22).

16. Bac selon la revendication 14, caractérisé en ce que les ailes d'appui (5) sont conformées en barrettes sur l'un des supports (22) pontant les parois latérales voisines (3) du bac.
